# EUROPEAN PATENT APPLICATION

(11) **EP 0 555 189 A1**
(43) Date of publication of application: **11.08.1993**
(21) Application number: 93830035.7
(22) Date of filing: 03.02.1993
(51) Int. Cl.: A21C 11/12

(54) **Machine for automatically and continuously incising oven foodstuffs**

(30) Priority: 07.02.1992 IT VR920008 U
(71) Applicant: G.P.A. ORLANDI S.p.A., I-37047 San Bonifacio (Verona) (IT)
(72) Inventor: Peduzzi, Giuliano, I-37012 Bussolengo, Verona (IT)
(74) Representative: Sarpi, Maurizio

(57) **Abstract**

The present machine carries out a series of incisions, in a completely automatic way, in the product to be worked, the working speed being very high and therefore suitable to high-duty plants.

Basically the machine in question comprises a series of cutting tools which consist of self-cleaning polygonal blades (17) arranged on a completely independent and automatic operating moving assembly which carries out a series of movements in relation to a tray supporting the product during the standing phase thereof.

The said operating assembly consists of a carriage (3) which is slidingly mounted on horizontal shafts (2) the height of which is adjustable. In the lower part the carriage is provided with a movable shifting plane (9) which is arranged on slanting shafts (7).

The plane (9) supports a horizontal bar (11) which supports a series of cutting elements the tools of which are the said polygonal blades (17).

## Description

The present invention relates to a machine that carries out a series of incisions, in a completely automatic way, in oven alimentary products such as products for making bread or the like, which stand still during the working phases which are carried out by movable working and cutting assemblies.

According to the known art, oven products need to be worked before being baked in order to reach a certain quality and outer aspect.

In the field of bread-making, it is necessary to make a determined dough for obtaining a determined type of bread. Then, this dough has to be modelled so as to reach the desired final aspect when the baking is finished.

The present machine has been conceived above all but not exclusively for working a particular type of bread, the so-called roll or "baguette", which shows a basically long or elongate shape with rounded ends. The main feature of this kind of bread is the particular working of the whole upper band which shows openings and lifted parts the inside of which is clearer than the outer colour of the baked bread. This working is accomplished by effecting a longitudinal incision or a series of incisions which are to be done on the upper surface of the raw product which is the reason why the incised parts will open with a certain delay during the baking so as to obtain a clearer colour fort the inner parts.

At the present time incision operations for this kind of bread are carried out manually or by means of machines which have some inconveniences due in particular to the inefficiency of the cutting means which consist in general of blades which penetrate into the product and are liable to a probable staining since the product itself, which is still viscous, sticks to the cutting part of the tool easily.

In some of the known machines the product is arranged on a movable tray which, during its advancement, is progressively interested by cutting assemblies arranged on fixed supports. However in this case the incision operations are not sufficiently rapid and precise. On the contrary, rapidity and precision are indispensable characteristics, especially for high-duty plants.

The above cited inconveniences and other consequent ones due to the difficulty in incising the oven products have been removed by the present invention since a machine has been conceived which carries out, in a completely automatic way, one or more incisions in the product to be worked, the speed being high, the incision assembly being arranged on a series of movable supports which carry out all the necessary shiftings in relation to the product which stops and remains still during the standing phase.

Within the aforesaid general purpose, the present invention proposes in particular that there are self-cleaning cutting elements which are so shaped aid moved so that they are able to carry out a perfect "underskin" rutting, without being fouled, and to permit a continuous, uninterrupted machining since cleaning operations are not necessary contrary to the known machines.

Another purpose, which the present invention has reached, consists in a perfect cutting since the blades act diagonally and this is the best position for progressively opening the bread.

The invention refers, in fact, to a machine for automatically and continuously incising oven foodstuffs, characterized by the fact of consisting of a containing structure which comprises a transverse guide support, adjustable for height, for permitting the stopping and the moving of a movable carriage which supports a working assembly which is provided with self-cleaning rotating blades which are preferably polygonal and are controlled by turbines or the like; the said working assembly being mounted on the said carriage which comprises an inclined base, supported by shifting guides and supporting a horizontal bar for holding a series of incising elements which are provided with the said polygonal rotating blades, actuated by the said turbines; the said incising elements being mounted on supports which are arranged with a certain inclination, for instance 10 degrees, in relation to the said bar and the horizontal plane, and with another inclination, for instance 30 degrees, in relation to the vertical plane; the movements, which are carried out by the said blades and the relative supports, being controlled and actuated by a central station which controls a pneumatic circuit or the like through a control system with limit switches and electro-valves; during the machining the said blades may penetrate in the product to be worked obliquely or with further inclinations.

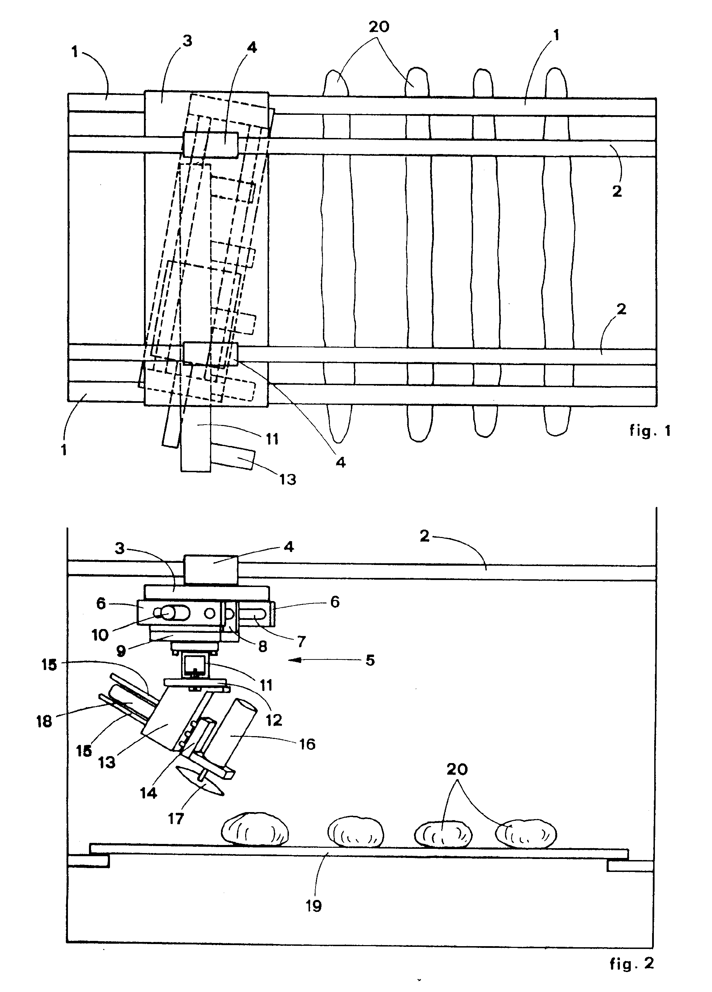

The invention can be better understood from the following specification, set forth as an example not limiting the invention itself, as well as from the accompanying drawing where:-
Figure 1 shows a schematical plan view of the invention in general;
Figure 2 shows a schematical view of a side part;

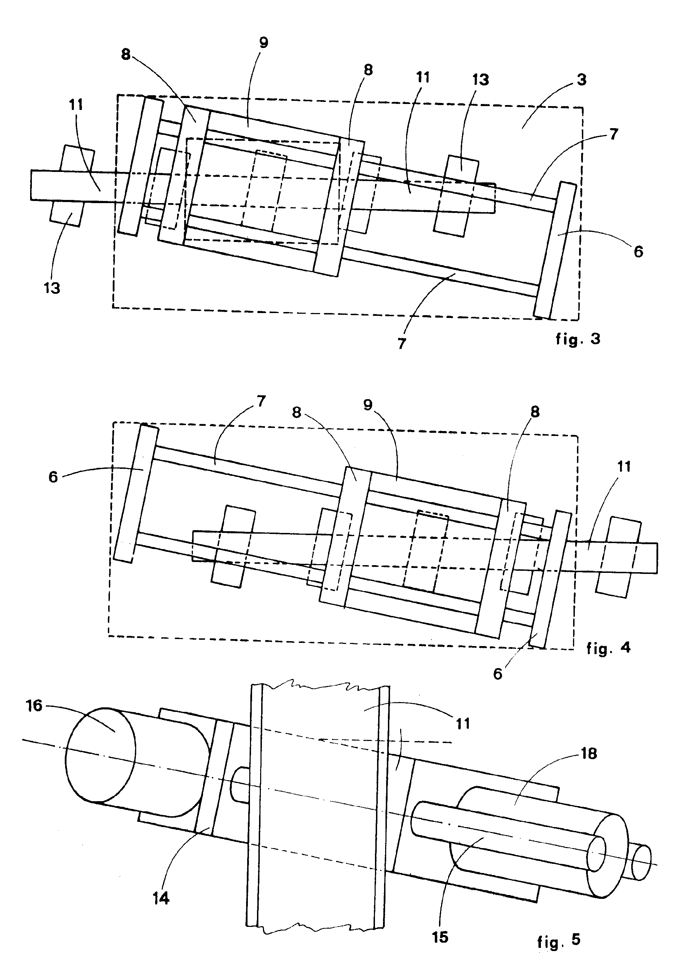

Figure 3 shows a schematical plan view of the supporting assembly which supports the incising elements during a first machining phase;
Figure 4 shows a schematical view of the phase subsequent to that of Fig. 3, after the transverse shifting of the carriage supporting the tools;
Figure 5 shows a schematical plan view of a detail of the support aid the moving means for an incision assembly.

With reference to the accompanying drawing, number 1 denotes a structure which supports and contains a machine for automatically and continuously incising oven alimentary products. The machine comprises a pair of horizontal guides 2 which support a carriage 3 which slides on the guides through bushings 4.

The carriage 3 is moved by known shifting means, not shown, and is shifted along the guides 2 horizontally and at regular intervals in order to permit the progressive advancement of a working assembly 5 which is provided with a series of incising tools which are arranged horizontally and orthogonally in relation to the guides and to the direction of travel of the carriage 3.

In fact the said carriage consists of a horizontal plate on the lower surface of which two horizontal parallel shafts 7 are fixed through sockets 6. The horizontal parallel shafts 7 are displaced angularly with a certain inclination, for instance 10 degrees, in relation to the hypothetic longitudinal axis of the said plate of the carriage 3.

Supporting sockets 8 are mounted on the shafts 7 and support a sliding base 9 which is inclined like the shafts 7 on which it slides.

The base 9 is moved along shafts 7 between two end positions through a horizontal piston 10 which is mounted on one of the sockets 6, the piston rod being fixed to one of the sockets 8 of the base 9 so as to move the base 9 to a wished extent.

A bar 11 is fixed to the lower part of the base 9 and is parallel to the aforesaid hypothetic longitudinal axis of the carriage 3 since the bar 11 is arranged at an angle of 10 degrees contrary to the angle of the shafts 7.

The bar 11 holds a plurality of incising assemblies at a certain distance one from another. The number of the incising assemblies may vary according to the type of working and the length of the raw alimentary product to be worked.

The bar 11 comprises, in fart, an inner rail on which plates 12 are mounted. The plates 12 support an inclined socket 13 which, in turn, supports the incising elements and the respective actuating and moving means.

Each incising element is provided with a supporting bracket 14 which is mounted on the end of sliding shafts 15. A turbine 16 or other similar actuating means is fixed to the bracket 14. The turbine shaft is provided with a self-cleaning rotating blade 17 which shows a particular shape, that is polygonal.

The socket 13 of each assembly is inclined 30 degrees in relation to the vertical plane, and 10 degrees in relation to the horizontal axis on which the sliding carriage 3 advances.

Consequently the blade also has an inclination of 30 degrees and penetrates in the oven product to be worked at an angle of 30 degrees.

Further, each bracket 14 and the shafts 15, on which the bracket is mounted, move on the respective socket 13 through the intervention of a piston 18.

The union of more incising elements forms a cutting face which consists of more blades, placed side by side horizontally.

Now, we shall describe briefly an example of functioning of the machine according to the present invention.

A pan 19, already loaded with rolls 20 of still raw bread, is introduced in the inner part of the machine. Then the machine functioning is actuated by a central station, for instance pneumatic, which involves the intervention of two electro-valves, one valve controlling the piston 10 for permitting a side travel of the carriage, and the other valve controlling the movement of the piston 18 for permitting the advancement of the assemblies supporting the blades.

At first the pistons 10 move and let the blades 17 penetrate. Contemporaneously the pistons 10 actuate the turbines 16 for permitting the blades to rotate.

When the blades are in an advanced position and rotate, the second electro-valve intervenes and actuates the piston 10 which moves the base 9 diagonally till reaching the opposite end of the shafts 7, a series of incisions being made on all the upper surface of the product.

At this stage the pistons 18 control the withdrawal of the cutting assemblies and the consequent stopping of the turbines 16 since the turbines are controlled by stroke ends which are synchronized with the displacement of the brackets 14 supporting the turbines, and the return of the base 9 to the initial position.

Contemporaneously with the return of the cutting assemblies, the carriage 3 advances on the guides 2 through a chain pulling assembly or the like, synchronized with the other movement elements of the machine so that the cutting assemblies are brought over the following roll of bread to be incised.

The particular arrangement of the blades 17, their high speed of rotation, their particular polygonal shape and the type of displacement of their moving assemblies are the main elements which determine a perfect cutting action for the dough, the possibility of soiling owing to the viscosity of the product being prevented since the product does not stick to the cutting part of the blades at all.

As an advantage it is provided that all the discharges of the pneumatic circuit be cronvoyed to and collected in a filtering system in order to prevent the presence of lubricated air in a place where there are foodstuffs.

## Claims

1) Machine for automatically and continuously incising oven foodstuffs, chararterized by the fart of consisting of a containing structure (1) which comprises a transverse guide support (2), adjustable for height, for permitting the stopping and the movement of a movable carriage (3) which supports a working assembly (5) which is provided with self-cleaning rotating blades (17) which are preferably polygonal and are controlled by turbines (16) or other similar actuating means, the said working assembly being apt to carry out incisions in products (20) which are arranged on supporting planes (19), such incisions being made when the supporting planes are in a standing phase.

2) Machine as claimed in the preceding claim, characterized by the fact that the said working assembly (5) is mounted on the said carriage through an inclined base, supported by shifting guides (7) and supporting a horizontal. bar (11) for holding a series of incising elements which are provided with the said polygonal rotating blades (17).

3) Machine as claimed in the preceding claims, characterized by the fact that the said incising elements are mounted on supports (12) (13) which are arranged wich a certain inclination in relation to the said bar and in respect to the horizontal plane and the vertical plane.

4) Machine as claimed in the preceding claims, characterized by the fact that the movements, which are carried out by t he said blades (17) and the relative supports, are controlled and actuated by a central station which controls a pneumatic circuit or the like through a control system with limit switches and electro-valves.

5) Machine as claimed in the preceding claims, charaterized by the fact that during the machining the said blades (17) may penetrate obliquely in the product to be worked.

6) Machine as claimed in the preceding claims, characterized by the fact that all the workings, which the machine carries out, need no manual cleaning or controlling.
